(19)

Europäisches
Patentamt
European
Patent Office
Office européen
des brevets

(11) **EP 2 870 705 B1**

(12) **EUROPEAN PATENT SPECIFICATION**

(45) Date of publication and mention
of the grant of the patent:
**21.02.2018 Bulletin 2018/08**

(21) Application number: **12730227.1**

(22) Date of filing: **03.07.2012**

(51) Int Cl.:
*H04B 7/024* (2017.01)  *H04L 5/00* (2006.01)
*H04B 7/06* (2006.01)

(86) International application number:
**PCT/EP2012/062914**

(87) International publication number:
**WO 2014/005624 (09.01.2014 Gazette 2014/02)**

(54) **CSI-RS TRANSMISSION**

CSI-RS-ÜBERTRAGUNG

TRANSMISSION CSI-RS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.05.2015 Bulletin 2015/20**

(73) Proprietor: **Telefonaktiebolaget LM Ericsson
(publ)
164 83 Stockholm (SE)**

(72) Inventors:
• **HAMMARWALL, David
S-186 53 Vallentuna (SE)**

• **FRÖBERG OLSSON, Jonas
S-590 74 Ljungsbro (SE)**

(74) Representative: **Brann AB
P.O. Box 3690
Drottninggatan 27
103 59 Stockholm (SE)**

(56) References cited:
**WO-A1-2011/100520    WO-A1-2011/153286
WO-A2-2011/115421    US-A1- 2011 170 435**

## Description

## TECHNICAL FIELD

Embodiments presented herein relate to obtaining channel state information in mobile communications networks. Embodiments presented herein particularly relate obtaining channel state information with respect to a plurality of coordinated antennas in mobile communications networks.

## BACKGROUND

In mobile communications networks, there is always a challenge to obtain good performance and capacity for a given communications protocol, its parameters and the physical environment in which the mobile communications network is deployed.

In mobile communications networks, channel state information (CSI) refers to channel properties of a communication link. This information describes how a signal propagates from a transmitting device to a receiving device. The CSI may be used to adapt transmissions to current channel conditions by the receiving device sending CSI feedback reports to the transmitting device.

In Release 8 and 9 of the 3GPP (3rd Generation Partnership Project) LTE (Long Term Evolution) standard the UE (User Equipment) base the CSI feedback reports on measurements on the CRS (Cell-specific Reference Symbols), see "Physical Channel and Modulation (Release 8), 3GPP TS 36.211". In LTE the transmitted downlink signal consists of a number of subcarriers for a duration of a number of OFDM (orthogonal frequency-division multiplexing) symbols. The downlink signal can be represented by a resource grid. Each component within the grid represents a single subcarrier for one symbol period and is referred to as a resource element (RE). In MIMO (multiple-input and multiple-output) applications, there generally is a resource grid for each transmitting antenna. The locations in the RE grid, where CRS are transmitted is cell-specific. This means that for some pairs of time synchronized cells the CRSs are overlapping (colliding), while for other pairs the CRSs are non-colliding.

In Release 10 of the 3GPP specifications so-called CSI-RS (channel state information reference symbols) were introduced, see "Physical Channel and Modulation (Release 10), 3GPP TS 36.211". The CSI reference resource is defined in LTE as the subframe for which the UE, to the best of its knowledge, shall report the channel state for in a specific report. See TS 36.213 Section 7.2.3. The CSI-RS enable UE-specific weights to be applied to the RS for UE channel measurement purposes according to the CSI feedback. In general terms the CSI-RS are transmitted on a configurable set of resource elements within a subframe, defined by the CSI-RS configuration (so-called resource Config). Further, the CSI-RS are transmitted with a given periodicity (and offset) defined by the parameter /CSI-RS (subframe Config). When CSI-RS are transmitted, the network node (in LTE defined by the so-called evolved Node B, eNB) does not transmit any data. This means that the only interference occurring on the CSI-RS will be inter-cell interference (i.e.originating from a network node in another cell). A number of essentially orthogonal CSI-RS configurations (i.e., a set of RE used to send the CSI-RS) are possible to set up.

WO 2011/115421 A2 describes a communication system in which, a base station (BS) transmits to a mobile station (MS), information of a plurality of channel state information-reference signal (CSI-RS) configurations and receives a CSI feedback regarding measurement of a downlink channel from the MS.

As specified in "Physical layer procedures (Release 10), 3GPP TS 36.213", for a given cell there is at most one CSI-RS configuration where the UE shall assume non-zero transmission power. Further, for a given cell there are zero or more configurations where the UE shall assume zero transmission power; that is, where the UE will not try to receive data but the data channel is rate match around the associated resource elements.

In view of the above there is a need for improved channel state information provision.

## SUMMARY

An object of embodiments herein is therefore to provide for improved channel state information provision. As noted above the CSI-RS are transmitted on a configurable set of resource elements within a subframe. However, the network nodes (i.e., the eNB:s) may not necessarily know exactly when the UE applies a new configuration. Further, the extensive time duration required for applying a new configuration may result in that the CSI is obsolete once applied by the UE. A particular object of embodiments herein is therefore to provide a method of obtaining channel state information, CSI, particularly with respect to a plurality of coordinated antennas.

According to a first aspect there is provided a method of obtaining channel state information, CSI, with respect to a group of coordinated transmission points, TPs. The method is performed in a control node. The method comprises transmitting, by the group of coordinated TPs, according to different CSI-RS transmit configurations and at different points in time, channel state information reference symbols, CSI-RS. The transmission comprises transmitting at least one non-hopping CSI-RS and at least one hopping CSI-RS that hops from a first TP from the group of coordinated TPs to a second TP from the group of coordinated TPs. At a first time instance a CSI report from at least one user equipment, UE, is received. Further, said received CSI report is associated with a specific CSI-RS transmit configuration of the different CSI-RS transmit configurations.

Advantageously, a CSI report received from a UE is thereby by the control node coupled to a particular CSI-RS transmission of a TP. Reception of CSI reports related to a particular TP is thereby enabled. The CSI-RS are preferably transmitted at different points in time from the different TPs (or groups of TPs). A CSI report from a UE may then be triggered such that it reflects a CSI-RS received at a particular one of the different points in time.

Advantageously, transmission of PDSCH may thereby be disconnected from the CSI-RS transmissions. Further, advantageously, the transmission of CSI-RS from different transmission points is for pure CSI reporting purposes and hence does not impose any restriction on the transmission of the PDSCH. This is different from so-called coordinated beamforming/switching where PDSCH transmission is tightly connected to the transmission scheme of the reference symbols for CSI estimation.

There is also provided a control node for obtaining channel state information, CSI, with respect to a group of coordinated transmission points, TPs. The control node comprises the group of coordinated TPs arranged to transmit channel state information reference symbols, CSI-RS, according to different CSI-RS transmit configurations and at different points in time. The transmission comprises transmission of at least one non-hopping CSI-RS and at least one hopping CSI-RS that hops from a first TP from the group of coordinated TPs to a second TP from the group of coordinated TPs. The control node further comprises a receiver arranged to, at a first time instance, receive a CSI report from at least one user equipment. The control node further comprises a processing unit arranged to associate said received CSI report with a specific CSI-RS transmit configuration of the different CSI-RS transmit configurations.

According to embodiments the network node is an Evolved Node B.

According to a second aspect there is provided a method of providing configuration of transmissions of channel state information reference symbols, CSI-RS, to a group of coordinated transmission points, TPs. The method is performed in a control node. CSI-RS transmit configurations are determined. The transmit configurations assign the CSI-RS for different sub-groups in a group of coordinated transmission points, TPs, to be transmitted at different points in time and the CSI-RS for all TPs in each sub-group to be transmitted simultaneously. TPs in the group of coordinated TPs are provided with the determined transmit configurations.

There is also provided a computer program. The computer program comprises computer program code which, when run on a control node, causes the control node to perform a method according to the first and/or second aspect. There is also provided a computer program product comprising the computer program and a computer readable means on which the computer program is stored.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

## BRIEF DESCRIPTION OF THE DRAWINGS

The invention is now described, by way of non-limiting examples, with reference to the accompanying drawings, in which:

Figs 1 and 2 are schematic diagrams illustrating prior art mobile communications networks;

Fig 3 is a schematic diagram showing functional modules of a control node;

Fig 4 shows one example of a computer program product comprising computer readable means;

Figs 5-7 are schematic diagrams illustrating mobile communications networks where embodiments presented herein may be applied; and

Figs 8 and 9 are flowcharts of methods according to embodiments.

## DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

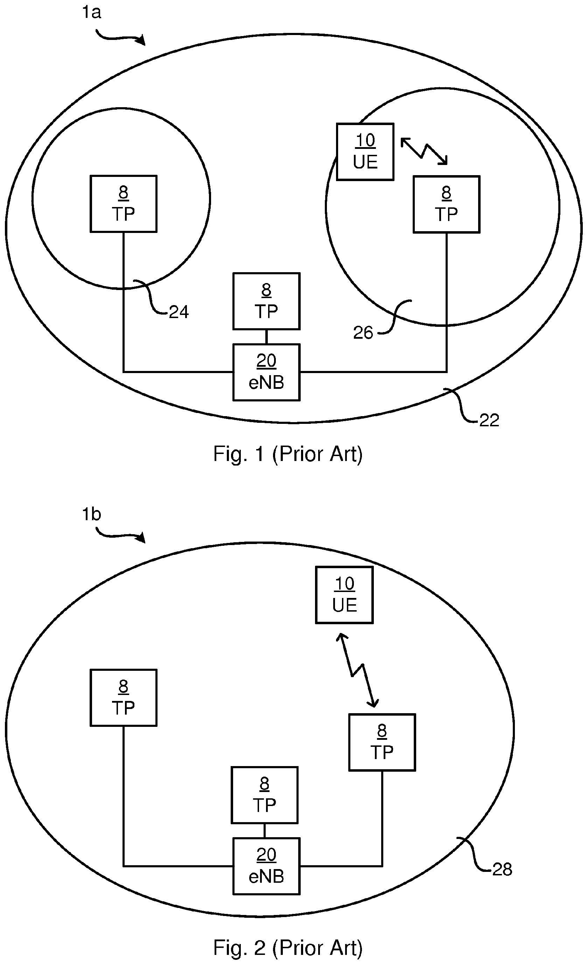

Fig 1 is a schematic diagram illustrating a mobile communications network 1a. The mobile communications network 1a may generally comply with any one or a combination of W-CDMA (Wideband Code Division Multiplex), LTE (Long Term Evolution), EDGE (Enhanced Data Rates for GSM Evolution, Enhanced GPRS (General Packet Radio Service)), CDMA2000 (Code Division Multiple Access 2000), etc., as long as the principles described hereinafter are applicable. Preferably the network 1a is an Evolved Universal Terrestrial Radio Access (E-UTRA) network. The mobile communications network 1a comprises network nodes 20, transmission points (TP) 8, and a user equipment (UE) 10.

Typically the E-UTRA network consists only of network nodes 20 in the form of eNodeBs (E-UTRAN NodeB, also known as Evolved NodeB) on the network side. A traditional NodeB typically has minimum functionality, and is controlled by an RNC (Radio Network Controller). NodeB is a term used in UMTS (Universal Mobile Telecommunications System) equivalent to the BTS (base transceiver station) description used in the Global System for Mobile Communications (GSM). It is the hardware that is connected to the mobile phone network that communicates directly with the UE 10. The eNodeB (as represented by the network node 20 in Fig 1) performs tasks similar to those performed together by the NodeBs and the RNC (radio network controller) in UTRA. The aim of the E-UTRA simplification is generally to reduce the latency of radio interface operations. eNodeBs are typically connected to each other via the so-called X2 interface, and they connect to the packet switched (PS) core network 5 via the so-called S1 interface. In E-LTTRA the mobile communications terminal is termed User Equipment (UE) but it may also be known as mobile terminal, user terminal, user agent, etc.

By a Transmission Point (TP) is denoted a set of antennas covering essentially the same geographical area in the same manner. Thus, a TP may correspond to one of the sectors at a site, but it may also correspond to a site having one or more antennas, all intending to cover a similar geographical area. Often, different TPs represent different sites. Antennas correspond to different TPs when they are sufficiently geographically separated and/or have antenna diagrams pointing in sufficiently different directions. Although the present disclosure focuses mainly on downlink CSI-RS transmissions, it should be appreciated that in general, a TP may also function as a reception point whereby the TP wirelessly receives communication signals from one or more UE 10.

In scenarios where UEs 10 are highly clustered, one or more low-output power micro (or pico) sites could be used to complement a macro site providing basic coverage of a cell. A macro cell 22 is a cell in a mobile communications network that provides radio coverage served by a high power conventional network node 20 (at the macro site) that use dedicated backhaul and is open to public access. A micro (or pico) cell 24, 26 is a cell in a mobile communications network served by a low power network node (at the micro/pico sites) that use dedicated backhaul connections and is open to public access. Typically a micro cell transmits at around 5W and a pico cell transmits at around 1 W. Traditionally, a UE 10 connects to the network node from which the downlink signal strength is the strongest. In Fig 1, the areas 24, 26 are those in which the signal from the corresponding micro node (as represented by the TP in the middle of each area 24, 26) is the strongest. UEs 10 in these zones preferably connect to the TP of the appropriate low-power node. In such a heterogeneous network deployment the network nodes (eNB) typically transmit with different power levels.

The transmission of different power levels often leads to imbalance problems around low power (micro or pico) nodes since the high-power (macro) node is selected as the serving cell since received signal strength is higher, although the pathloss to the low-power node is lower. To offload the macro (high-power) node and also improve the uplink (UL) performance (i.e. the transmission from UE 10 to eNB), cell-selection offset, also known as cell Range Expansion, can be used. However, applying range expansion leads to that downlink (DL) performance (i.e. the transmission from eNB to UE 10) may suffer due to a stronger signal from a non-serving cell. The shared cell concept provides means for decoupling of DL and UL without these problems. In the shared cell concept high-power and low power nodes form a common cell 28, see Fig 2. Fig 2 illustrates a mobile communications network 1b comprising a network node 20, transmission points (TPs) 8, and a UE 10. In Fig 2 one of the TPs 8 may represent a high-power node and the other of the TPs 8 may represent a low-power node, the two TPs thus forming a common shared cell 28.

The shared cell scenario could be improved by enabling operation involving multi-point operations schemes. In the shared cell scenario it may thus be desirable to enable and select between different multi-point operations schemes. For example, for joint transmission two or more transmission points could be enabled to send the same information to a common UE 10. For example, for SDM (Spatial Division Multiplexing) two or more transmission points could be enabled to transmit during the same TTI (Transmission Time Interval) whilst each transmission point is sending to at most one UE 10. Further, in a shared cell scenario it would also be desirable for the scheduler to obtain CSI information with respect to each transmission point and with respect to each combination of multi-point operation scheme.

However, even with support of Release 10 of the 3GPP specifications the UE 10 can be configured with at most one CSI-RS configuration and several so-called zero-power CSI-RS where the UE 10 shall assume no PDSCH (Physical Downlink Shared Channel) transmission. Additionally, the CSI-RS configurations are UE-specific, meaning that the different CSI-RS may be sent in different time/frequency instances.

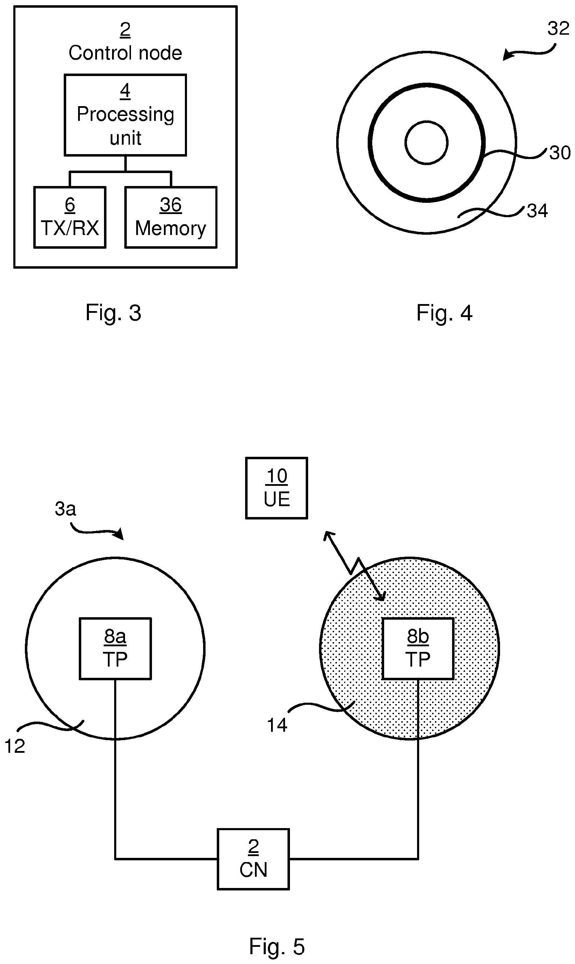

Fig 3 schematically illustrates, in terms of a number of functional modules, the components of a control node 2. Since, as noted above, the control node 2 (or at least the functionality related to the control node 2) may be part of (or implemented in) an eNB 20, the functional modules of the control node 2 may also be part of (or implemented in) an eNB 20. A processing unit 4 is provided using any combination of one or more of a suitable central processing unit (CPU), multiprocessor, microcontroller, digital signal processor (DSP), application specific integrated circuit (ASIC) etc., capable of executing software instructions stored in a computer program product 32 (as in Fig 4), e.g. in the form of a memory 36. Thus the processing unit 4 is thereby preferably arranged to execute methods as herein disclosed. The memory 36 may comprise persistent storage, which, for example, can be any single one or combination of magnetic memory, optical memory, solid state memory or even remotely mounted memory. The control node 2 further comprise a communications interface in the form of a transmitter and a receiver, TX/RX 6, for communicating with the core network, with other network nodes, such as other control nodes, and with transmission points 8. The TX/RX 6 generally comprises analogue and digital components forming the functionalities of a transmitter and a receiver, a network interface for wired communications and/or a suitable number of antennas for radio communication with user equipment (UE) 10 within one or more radio cells. The processing unit 4 controls the general operation of the control node 2, e.g. by sending control signals to the TX/RX 6 and receiving reports from the TX/RX 6 of its operation. Other components, as well as the related functionality, of the control node 2 are omitted in order not to obscure the concepts presented herein.

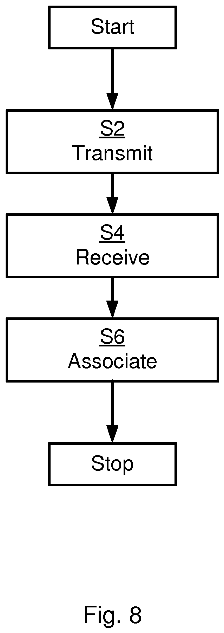

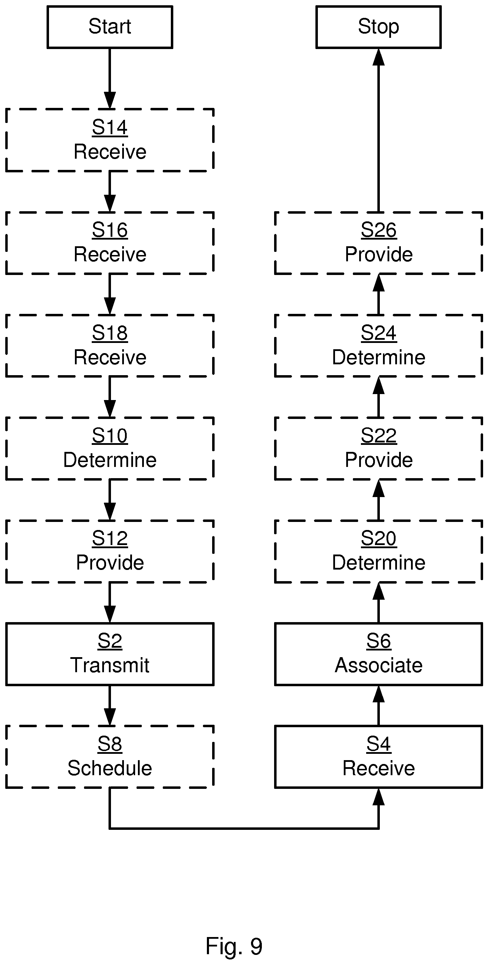

Figs 8 and 9 are flow charts illustrating embodiments of methods of obtaining channel state information, CSI, with respect to a plurality of coordinated antennas. The methods are preferably performed in the control node 2. According to embodiments the control node 2 (or at least the functionality related to the control node 2) is part of (or implemented in) an eNB 20. The methods are advantageously provided as computer programs 30. Fig 4 shows one example of a computer program product 32 comprising computer readable means 34. On this computer readable means 34, a computer program 30 can be stored, which computer program 30 can cause the processing unit 4 and thereto operatively coupled entities and devices, such as the memory 36 and the TX/RX 6 to execute methods according to embodiments described herein. In the example of Fig 4, the computer program product 32 is illustrated as an optical disc, such as a CD (compact disc) or a DVD (digital versatile disc) or a Blu-Ray disc. The computer program product could also be embodied as a memory (RAM, ROM, EPROM, EEPROM) and more particularly as a non-volatile storage medium of a device in an external memory such as a USB (Universal Serial Bus) memory. Thus, while the computer program 30 is here schematically shown as a track on the depicted optical disk, the computer program 30 can be stored in any way which is suitable for the computer program product 32.

Fig 5 is a schematic diagram illustrating a mobile communications network 3a comprising a control node 2 and two transmission points: TP 8a and TP 8b. A UE 10 is in communications with TP 8b. The UE 10 within the cell is configured with one CSI-RS resource, where the transmission of the CSI-RS is looped between the TPs. In Fig 5 the fact that TP 8a and TP 8b transmit CSI-RS in different time slot is schematically illustrated by reference numerals 12 and 14 (hence reference numerals 12 and 14 do not correspond to the cell coverage of the TPs). The UE 10 is may be configured to report CSI-RS with the same periodicity as the CSI-RS is hopping (for example, as in Fig 5 between TP 8a and TP 8b). However, in general, the CSI-RS can be transmitted from a TP multiple times before hopping to a next TP. For example, first there are two CSI-RS transmissions from TP#1, then two CSI-RS transmissions from TP#2, then again two CSI-RS transmissions from TP#1, and so on. Thereby two consecutive CSI reports per TP without "hopping" may be obtained. Transmitting the CSI-RS from a TP multiple times before hopping to a next TP may be used for example if a UE 10 is not able to handle fast hopping of the CSI-RS or if detailed fast "sampled" CSI is desired. Then, each TP transmits one (or more) static (non-hopping) CSI-RS and one or more slowly hopping CSI-RS. A UE 10 may (as in 3GPP LTE Release 11 and beyond) be configured with a few static CSI-RS corresponding to transmission schemes that are currently preferable for fast selection there between. The hopping CSI-RS are then used for evaluating new transmission schemes to be included in a set of fast selectable transmission schemes. Hence the enclosed embodiments readily apply also where UEs are not "well-behaved".

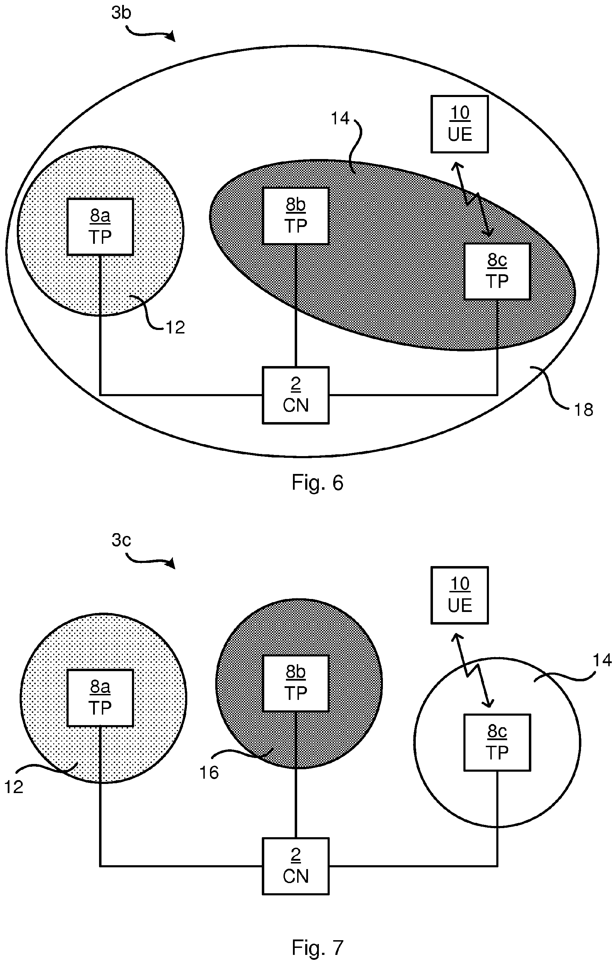

The enclosed embodiments may readily apply in a shared cell scenario. For example, assume a shared cell scenario with one high-power transmission point TP 8a and two lower-power transmission points 8b and 8c in a shared cell 18 as illustrated in the mobile communications network 3b of Fig 6. The UE 10 within the cell is configured with one CSI-RS resource determined by the control node 2, where the transmission of the CSI-RS is looped between two TP groups, where TP 8a forms a first TP group and TP 8b and TP 8c form a second TP group. In Fig 6 the fact that TP 8a in the first group and TP 8b and TP 8c in the second group transmit CSI-RS in different time slot is schematically illustrated by reference numerals 12 and 14.

Assuming that the UE 10 does not perform excessive time-interpolation between CSI-RS transmissions, the channel estimation will at the time of the reporting correspond to that of the TP that most recently transmitted the CSI-RS. According to embodiments a UE 10 autonomously avoids time-interpolation in the channel estimation if the CSI-RS is hopping, since that inherently will cause the UE 10 to estimate a very high Doppler for the CSI-RS, which should reduce the time-interpolation window to close to zero. A method of obtaining channel state information, CSI, with respect to a plurality of coordinated antennas 8 thus comprises in a step S2 transmitting, by the plurality of antennas, according to different CSI-RS transmit configurations and at different points in time, channel state information reference symbols, CSI-RS. At a first time instance a CSI report from at least one user equipment, UE 10 is received, step S4. Based on the CSI report being received at the first time instance the received CSI report is in a step S6 associated with a specific CSI-RS transmit configuration of the different CSI-RS transmit configurations. Hence, specific CSI-RS transmissions from TPs are thereby related to reception of CSI reports for those specific CSI-RS transmissions. The CSI-RS transmit configurations each define a mapping from CSI-RS ports to the plurality of coordinated antennas. A CSI-RS transmit configuration thus specifies a certain mapping of CSI-RS ports to the different antennas at different transmission points, TPs. The steps of receiving and associating should be interpreted as triggering and receiving CSI reports in a desired manner.

Scheduling transmission of a CSI report from the at least one UE 10, step S8, may be performed prior to the step of receiving in step S4. The CSI report may be scheduled so that the CSI report corresponds to a particular CSI-RS transmit configuration.

The association of the specific CSI-RS transmit configuration may comprises determining a CSI reference resource of the CSI report. The specific CSI-RS transmit configuration may then correspond to the CSI-RS transmit configuration being active prior to and including the CSI reference resource. The CSI reference resource is defined in LTE as the subframe for which the UE 10, to the best of its knowledge, shall report the channel state for in a specific report, see TS 36.213 Section 7.2.3. The specific CSI-RS transmit configuration may furthermore be associated with a subframe belonging to the same subframe set as the CSI reference resource.

The CSI-RS transmit configurations used during the transmitting in step S2 may be provided in a number of ways. For example, in a step S10 the CSI-RS transmit configurations are determined. According to embodiments, the transmit configurations assign the CSI-RS for different sub-groups (12, 14, 16) in a group of coordinated transmission points, TPs, to be transmitted at different points in time and the CSI-RS for all TPs in each sub-group to be transmitted simultaneously. The determined transmit configurations may then be provided, in a step S12, to TPs in the group of coordinated TPs. In other words: transmission of the CSI-RS for a first sub-group of the coordinated transmission points occur at a different point in time than transmission of the CSI-RS for a second sub-group of the coordinated transmission points. Steps S10 and S12 may define a method of providing configuration of CSI-RS transmissions to a group of coordinated transmission points.

For example, the CSI-RS configuration may be such that CSI-RS is sent in a SSFN (System Sub Frame Number) such that (SSFN = 10 · SFN + SF, where SFN is the System Frame Number and SF is the Sub Frame Number):

$$SSFN(n) = \Delta_{CSI-RS} + n \cdot T_{CSI-RS},$$

where $\Delta_{CSI-RS}$ is the sub frame offset and $T_{CSI-RS}$ is the CSI-RS periodicity, and where n is a variable indexing the transmission times for the CSI-RS. Then, assuming that $n=0$ is the first instance that the CSI-RS can be transmitted, the CSI-RS will be transmitted at instances $SSFN(0) = \Delta_{CSI-RS}$, $SSFN(1) = \Delta_{CSI-RS} + T_{CSI-RS}$, $SSFN(2) = \Delta_{CSI-RS} + 2 \cdot T_{CSI-RS}$, ... and so on for n = 0,1,2, ....

Further, the transmission of the CSI-RS can be divided between the group of TPs according to

TP#0: n (mod K) = 0

TP#1: n (mod K) = 1

TP#2: n (mod K) = 2

and so on for K groups of TPs. Note that each group of TPs may have only one member (as for the embodiment illustrated in Figs 5 and 7) or at least one of the TP groups may have at least two members (as for the embodiment illustrated in Fig 6). Fig 7 is a schematic diagram illustrating a mobile communications network 3c comprising a control node 2 and three transmission points: TP 8a, TP 8b, and TP 8c. A UE 10 is in communications with TP 8c. The UE 10 is configured with one CSI-RS resource, where the transmission of the CSI-RS is looped between the TPs. In Fig 7 the fact that TP 8a, TP 8b and TP 8c all transmit CSI-RS in different time slot is schematically illustrated by reference numerals 12, 14 and 16. For example, assume that TP 8a corresponds to TP#0, that TP 8b corresponds to TP#1, and that TP 8c corresponds to TP#2. The transmission of the CSI-RS are thus divided such that firstly TP 8a transmits the CSI-RS, secondly TP 8b transmits the CSI-RS, and thirdly TP 8c transmits the CSI-RS.

The transmit configurations may be based on a number of parameters. For example, the transmit configurations may be adapted based on the number of UE 10 in the cell. Thus, in a step S18 an indication of the number of UE 10 currently associated with the group of coordinated TPs is received. The CSI-RS transmit configurations may then be based on this number. The indication received in step S18 may be based on received CSI-RS responses from the number of UE 10.

The scheduling of CSI reports in step S8 may be triggered by the determined transmit configurations. The CSI reports from at least one user equipment, UE 10, are according to embodiments received, in a step S14, prior to determining the transmit configurations in step S10. Transmission of the CSI reports by the UE 10 may then be triggered at time instances corresponding to different transmissions of CSI-RS from different sub-groups of TPs.

Two types of triggering of CSI reports may be supported; a-periodic and periodic. According to a-periodic triggering the UE 10 may get an uplink grant for sending a CSI report. However, the CSI report may also be multiplexed in the uplink transmission of data. Hence the uplink grant is not a necessary condition for transmission of the CSI report. The grant is sent in a downlink subframe and the type of the downlink subframe determines the CSI type to be reported. This means that CSI-RS can be sent from a first group of TPs and which triggers a CSI report according to the subframe type. According to periodic triggering the UE 10 for 3GPP LTE Release 10 reports two CSI reports with respect to the two subframe types. Other Releases of 3GPP LTE may allow different methods for triggering CSI reports. The enclosed embodiments are not limited to the triggering mechanism in 3GPP LTE Release 10. If the CSI-RS is sent during each report period, CSI-RS can in a first period be transmitted from a first TP group and in a next report period be transmitted from a second TP group.

According to an embodiment, at least a second CSI-RS that is not hopping is transmitted by at least one of the TPs. Thus further CSI-RS transmit configurations may also be determined and provided. Particularly, in a step S20 further CSI-RS transmit configurations are determined. The further CSI-RS transmit configurations are different from the previously determined CSI-RS transmit configurations. TPs in the group of coordinated TPs may then be provided, step S22 with the determined further CSI-RS transmit configurations. For example, a UE 10 that does not behave well for hopping CSI-RS may then be configured to measure on this second CSI-RS that show a more predictable and robust behaviour. UEs 10 that may need such fall back operation includes UEs 10 that estimates the Doppler based on, for example, the CRS and assumes the same Doppler is applicable also for a CSI-RS. Additionally, as noted above, static CSI-RS can be used to obtain CSI for fast selectable multi-point transmission schemes, while slowly hopping CSI-RS may be used for evaluating "new" multi-point transmission schemes to be added in the set of fast selectable transmission schemes. Well behaved UEs 10 may thereby advantageously harvest the benefits of more advanced coordinated network transmissions, whereas ill-behaved UEs 10 may still be able to operate robustly without additional performance degradation. Two different transmit configurations may thus be used simultaneously by the same TPs. Put in other words, the further CSI-RS transmit configurations may be used by the group of coordinated TPs simultaneously with the previously determined CSI-RS transmit configurations. Advantageously the further CSI-RS transmit configurations and the previously determined CSI-RS transmit configurations differ so that collision between CSI-RS transmissions from different TPs are non-colliding.

The TPs may have different number of antennas. For example, at least one particular TP that is involved in the CSI-RS hopping may have more transmit antennas than another TP. For the particular TP at least one CSI-RS port may be muted. The CSI-RS transmit configurations may thus involve a CSI-RS port of a TP to be muted. Further, the CSI-RS transmit configurations may involve at least one further CSI-RS port of a further TP to be muted.

As foreshadowed above, it may be desirable to acquire CSI reports for different transmission configurations. One such example is to configure CSI feedback for different elevation beams in a mobile communications network with UE-specific beamforming by utilizing a single CSI-RS that hops between the beams. The CSI-RS transmit configurations may thus further relate to one or more directions of elevation beams for transmissions of the CSI-RS. Elevation beamforming may be used for improving the performance in a network by not only apply precoding/beamforming of transmitted energy in an azimuth direction but also apply precoding/beamforming of transmitted energy in the elevation direction. The one or more directions may thus include an azimuth direction and an elevation direction. This can improve the received signal in a UE 10 since the transmitted energy can be pointed towards the UE 10, but also implicitly reduce the inter cell interference. One way of realizing elevation beamforming is to define a set of candidate beams that a UE 10 can be assigned based on e.g., its position or which beam that provides highest received power. Each such beam then behaves as a virtual transmission point and a CSI-RS can be beamformed in elevation in accordance with each such elevation beam. The UE 10 can then be configured to provide feedback for each of the candidate elevation beamformers.

The UE 10 in the (shared) cell has one CSI reporting configuration. A Release 10 UE 10 may be enabled to measure the channel interference on CRS. This means that the UE 10 will only "see" inter-cell inference. The CSI reported will thus only reflect the channel and not the strength of intra-cell interference caused by transmission from another transmission point (to another UE 10). This means that if the scheduler applies SDM and perform link adaption purely on reported CSI the select transport format is likely not robust enough. Therefore, some backoff in the link adaptation (LA) may be needed. Such a backoff may be fixed or may be selected based on estimating the amount of interference caused by different multi-point schemes. SRS (Sounding Reference Symbols) can, for example, be used to estimate the strength of the intra-cell interference. When UE 10 sends the SRS, each network node/transmission point can measure the received power to produce an estimate of the path loss between the transmission points and the UE 10 (assuming reciprocal channel with respect to path loss). Using the path loss estimates, the intra-cell interference caused by a particular multi-point scheme could be estimated to produce a better backoff in the LA than a fixed value. Alternatively, if a particular UE 10 reports a channel quality indicator (CQI), precoding matrix indicator (PMI), and/or rank indicator (RI) for a specific TP, the same report can also be used to estimate the interference received if that TP is allocated to transmit to a different UE 10.

The determining in step S10 may involve location (in radio sense) information of the UEs 10. Thus, in a step S16, information relating to current position(s) of at least one user equipment, UE, associated with the group of coordinated TPs is received. The determined transmit configurations may then be dependent on the current position(s). For example, if UEs 10 are close to only one TP there may be no need of sending CSI-RS from multiple TPs simultaneously since transmission from another TP to the UE 10 or joint transmission from the close TP and another TP is not beneficial. In another other scenario some UEs 10 may be "close" to more than one TP where the UEs 10 can be scheduled from one of the TPs or from several TPs simultaneously. This means that selected scheduling information of CSI-RS may depend on UE position. One such position measure could be UE measurements on cell-specific reference symbols for handover. Another could be measurement on UE transmitted Sounding Reference symbols (SRS).

The UE 10 may also be capable to measure interference on an interference measurement resource (IMR), corresponding to a configurable set of resource elements. The IMR configurations for two UEs 10 are such that they do not occur at the same time. This means that for an occurrence of an IMR, zero or more (other) transmission points may send data to one or more UEs 10. This means that the scheduler may control the interference situation at the time instances the UEs 10 estimate the interference. For example, to get CSI reports corresponding when a particular UE 10 is scheduled alone in the shared cell, the scheduler does not schedule any other UEs 10 when the particular UE 10 has its IMR. IMRs corresponding to a configurable set of resource element may be determined in a step S24. The IMRs are preferably determined such that the IMRs and the CSI-RS transmit configurations are non-overlapping. In a step S26 TPs in the group of coordinated TPs are provided with the IMRs. For example, assume that CSI-RS and IMR for a first UE 10 occurs at time instances t1, t2, t3, t4, t5, t6. The RE for CSI-RS and IMR do not overlap. For second UE 10 the RE for the IMR of the first UE 10 is used for data by second UE 10. Now apply hopping CSI-RS where CSI-RS is sent from TP1 in time instances t1, t3, t5 and from TP2 in time instances t2, t4, t6. Then, by the scheduler controlled interference (by scheduling or not scheduling the second UE 10 from TP2 (or some other TP)), the first UE 10 can be made to estimate the CSI (channel + interference) for the following scenarios:

- First UE 10 scheduled on TP1 alone (second UE 10 not scheduled) by not scheduling second UE 10 in time instances t1, t3 or t5.

- First UE 10 scheduled on TP1 at the same time as second UE 10 scheduled by scheduling second UE 10 from TP2 in time instances t1, t3 or t5.

- First UE 10 scheduled on TP2 alone (second UE 10 not scheduled) by not scheduling second UE 10 in time instances t2, t4 or t6.

- First UE 10 scheduled on TP2 at the same time as second UE 10 scheduled by scheduling second UE 10 from TP1 in time instances t2, t4 or t6.

Alternatively, the mobile communications network may configure a UE 10 with resource-restricted CSI measurements, which is available in LTE Release 10. This restriction allows the mobile communications network to partition the subframes in two groups in which the UE 10 shall estimate the interference independently. The mobile communications network can thus configure the UE 10 and the CSI-RS hopping such that the CSI reports for a particular TP alternates between the two interference levels.

The invention has mainly been described above with reference to a few embodiments. However, as is readily appreciated by a person skilled in the art, other embodiments than the ones disclosed above are equally possible within the scope of the invention, as defined by the appended patent claims. For example, although the above embodiments have been disclosed in the context of Releases 8, 9 and 10 of the 3GPP LTE standard, the embodiments may also apply in other releases where UEs are capable of measuring several CSI-RS. In such a scenario, the disclosed embodiments may be used to evaluate more multi-point schemes than the supported number of CSI-RS configurations. This may also allow the number of CSI-RS configurations to be reduced.

**Claims**

1.  A method of obtaining channel state information, CSI, with respect to a group of coordinated transmission points, TPs, the method being performed in a control node (2), comprising the steps of:

    transmitting (S2), by the group of coordinated TPs, according to different CSI-RS transmit configurations and at different points in time, channel state information reference symbols, CSI-RS, wherein the transmitting (S2) comprises transmitting at least one non-hopping CSI-RS and at least one hopping CSI-RS that hops from a first TP from the group of coordinated TPs to a second TP from the group of coordinated TPs; receiving (S4), at a first time instance, a CSI report from at least one user equipment, UE (10); and associating (S6) said received CSI report with a specific CSI-RS transmit configuration of the different CSI-RS transmit configurations.

2.  The method according to claim 1, wherein the different CSI-RS transmit configurations each define a mapping from CSI-RS ports to a plurality of coordinated antennas at one or more TPs of the group of TPs.

3. The method according to any one of the preceding claims, wherein the association of said specific CSI-RS transmit configuration comprises determining a CSI reference resource of said received CSI report, wherein said specific CSI-RS transmit configuration corresponds to the CSI-RS transmit configuration being active prior to and including said CSI reference resource, and wherein said specific CSI-RS transmit configuration is associated with a subframe belonging to a same subframe set as the CSI reference resource.

4. The method according to any one of the preceding claims, further comprising, prior to the step of receiving,
scheduling (S8) transmission of a CSI report from the at least one UE (10), wherein said CSI report is scheduled so that the CSI report corresponds to a particular CSI-RS transmit configuration.

5. The method according to any one of the preceding claims, further comprising:

   determining (S10) the different CSI-RS transmit configurations, the different CSI-RS transmit configurations assigning the CSI-RS for different sub-groups (12, 14, 16) in the group of coordinated TPs to be transmitted at different points in time and the CSI-RS for all TPs in each sub-group to be transmitted simultaneously; and
   providing (S12) TPs in the group of coordinated TPs with the determined different CSI-RS transmit configurations.

6. The method according to claim 5, further comprising:

   receiving (S16) information relating to current position(s) of the at least one UE (10) associated with the group of coordinated TPs, wherein the determined different CSI-RS transmit configurations are dependent on the current position(s).

7. The method according to 6, wherein the current position(s) is/are determined from received UE measurements on cell-specific reference symbols for handover.

8. The method according to 6, wherein the current position(s) is/are determined from sounding reference symbols, SRS, received from the at least one UE (10).

9. The method according to any one of the preceding claims, wherein the control node (2) is part of an Evolved Node B (20).

10. The method according to claim 5, further comprising:

receiving (S18) an indication of a number of the at least one UE (10) currently associated with the group of coordinated TPs, wherein the determined different CSI-RS transmit configurations are dependent on said number.

11. The method according to any one of the preceding claims, wherein the different CSI-RS transmit configurations further relate to one or more directions of elevation beams for transmissions of the CSI-RS.

12. A control node (2) for obtaining channel state information, CSI, with respect to a group of coordinated transmission points, TPs, comprising:

   the group of coordinated TPs arranged to transmit channel state information reference symbols, CSI-RS, according to different CSI-RS transmit configurations and at different points in time, wherein the transmitted CSI-RS comprise at least one non-hopping CSI-RS and at least one hopping CSI-RS that hops from a first TP from the group of coordinated TPs to a second TP from the group of coordinated TPs;
   a receiver (6) arranged to, at a first time instance, receive a CSI report from at least one user equipment, UE (10); and
   a processing unit (4) arranged to associate said received CSI report with a specific CSI-RS transmit configuration of the different CSI-RS transmit configurations.

13. The control node (2) according to claim 12, wherein said network node is an Evolved Node B (20).

14. A computer program product (32) comprising a computer program (30) stored on a computer readable means (34) for obtaining channel state information, CSI, with respect to a group of transmission points, TPs, comprising computer program code which, when run on a control node (2), causes the control node to perform a method comprising:

   transmitting (S2), by the group of coordinated TPs, according to different CSI-RS transmit configurations and at different points in time, channel state information reference symbols, CSI-RS, wherein the transmitting (S2) comprises transmitting at least one non-hopping CSI-RS and at least one hopping CSI-RS that hops from a first TP from the group of coordinated TPs to a second TP from the group of coordinated TPs;
   receiving (S4), at a first time instance, a CSI report from at least one user equipment, UE (10); and
   associating (S6 said received CSI report with a specific CSI-RS transmit configuration of the different CSI-RS transmit configurations.

**Patentansprüche**

1. Verfahren zum Erhalt von Kanalzustandsinformationen, CSI, in Bezug auf eine Gruppe von koordinierten Übertragungspunkten, TPs, wobei das Verfahren in einem Steuerknoten (2) durchgeführt wird, die folgenden Schritte umfassend:

   Übertragen (S2), durch die Gruppe von koordinierten TPs, von Kanalzustandsinformationsreferenzsymbolen, CSI-RS, gemäß verschiedenen CSI-RS-Übertragungskonfigurationen und zu verschiedenen Zeitpunkten, wobei das Übertragen (S2) das Übertragen von mindestens einem nicht springenden CSI-RS und mindestens einem springenden CSI-RS umfasst, das von einem ersten TP aus der Gruppe von koordinierten TPs zu einem zweiten TP aus der Gruppe von koordinierten TPs springt;
   Empfangen (S4), in einer ersten Zeitinstanz, eines CSI-Berichts von mindestens einem Benutzergerät, UE (10); und
   Assoziieren (S6) des empfangenen CSI-Berichts mit einer spezifischen CSI-RS-Übertragungskonfiguration der verschiedenen CSI-RS-Übertragungskonfigurationen.

2. Verfahren nach Anspruch 1, wobei die verschiedenen CSI-RS-Übertragungskonfigurationen jeweils eine Kartierung von CSI-RS-Anschlüssen zu einer Vielzahl von koordinierten Antennen an einem oder mehreren TPs aus der Gruppe von TPs definieren.

3. Verfahren nach einem der vorhergehenden Ansprüche, wobei das Assoziieren der spezifischen CSI-RS-Übertragungskonfiguration das Bestimmen einer CSI-Referenzressource des empfangenen CSI-Berichts umfasst, wobei die spezifische CSI-RS-Übertragungskonfiguration der CSI-RS-Übertragungskonfiguration entspricht, die vor der CSI-Referenzressource aktiv ist und diese beinhaltet, und wobei die spezifische CSI-RS-Übertragungskonfiguration mit einem Unterrahmen assoziiert wird, der zu einem gleichen Unterrahmensatz wie die CSI-Referenzressource gehört.

4. Verfahren nach einem der vorhergehenden Ansprüche, ferner umfassend, vor dem Schritt des Empfangens,
   Festlegen (S8) der Übertragung eines CSI-Berichts von dem mindestens einen UE (10), wobei der CSI-Bericht derart festgelegt ist, dass der CSI-Berichts einer bestimmten CSI-RS-Übertragungskonfiguration entspricht.

5. Verfahren nach einem der vorhergehenden Ansprüche, ferner umfassend:

   Bestimmen (S10) der verschiedenen CSI-RS-Übertragungskonfigurationen, wobei die verschiedenen CSI-RS-Übertragungskonfigurationen das CSI-RS für verschiedene Untergruppen (12, 14, 16) in der Gruppe von koordinierten TPs zur Übertragung zu verschiedenen Zeitpunkten und das CSI-RS für alle TPs in jeder Untergruppe zur simultanen Übertragung zuweisen; und
   Bereitstellen (S12) von TPs in der Gruppe von koordinierten TPs mit den bestimmten verschiedenen CSI-RS-Übertragungskonfigurationen.

6. Verfahren nach Anspruch 5, ferner umfassend:

   Empfangen (S16) von Informationen in Bezug auf aktuelle Position(en) des mindestens einen UE (10), das mit der Gruppe von koordinierten TPs assoziiert wird, wobei die bestimmten verschiedenen CSI-RS-Übertragungskonfigurationen von der/den aktuellen Position(en) abhängen.

7. Verfahren nach Anspruch 6, wobei die aktuelle(n) Position(en) anhand von empfangenen UE-Messungen an zellspezifischen Referenzsymbolen für die Übergabe bestimmt wird/werden.

8. Verfahren nach Anspruch 6, wobei die aktuelle(n) Position(en) anhand von tönenden Referenzsymbolen, SRS, die von dem mindestens einen UE (10) empfangen werden, bestimmt wird/werden.

9. Verfahren nach einem der vorhergehenden Ansprüche, wobei der Steuerknoten (2) Teil eines Evolved Node B (20) ist.

10. Verfahren nach Anspruch 5, ferner umfassend:

    Empfangen (S18) einer Angabe einer Anzahl des mindestens einen UE (10), die derzeit mit der Gruppe von koordinierten TPs assoziiert wird, wobei die bestimmten verschiedenen CSI-RS-Übertragungskonfigurationen von der Anzahl abhängen.

11. Verfahren nach einem der vorhergehenden Ansprüche, wobei die verschiedenen CSI-RS-Übertragungskonfigurationen ferner eine oder mehrere Richtungen von Höhenstrahlen für Übertragungen des CSI-RS betreffen.

12. Steuerknoten (2) zum Erhalt von Kanalzustandsinformationen, CSI, in Bezug auf eine Gruppe von koordinierten Übertragungspunkten, TPs, umfassend:

    die Gruppe von koordinierten TPs, die angeordnet ist, um Kanalzustandsinformationsreferenzsymbole, CSI-RS, gemäß verschiedenen CSI-RS-Übertragungskonfigurationen und zu verschiedenen Zeitpunkten zu übertragen, wobei die übertragenen CSI-RS mindestens ein nicht springendes CSI-RS und mindestens ein springendes CSI-RS umfassen, das von einem ersten TP aus der Gruppe von koordinierten TPs zu einem zweiten TP aus der Gruppe von koordinierten TPs springt;

einen Empfänger (6), der angeordnet ist, um in einer ersten Zeitinstanz einen CSI-Bericht von mindestens einem Benutzergerät, UE (10) zu empfangen; und

eine Verarbeitungseinheit (4), die angeordnet ist, um den empfangenen CSI-Bericht mit einer spezifischen CSI-RS-Übertragungskonfiguration der verschiedenen CSI-RS-Übertragungskonfigurationen zu assoziieren.

13. Steuerknoten (2) nach Anspruch 12, wobei der Netzwerkknoten ein Evolved Node B (20) ist.

14. Computerprogrammprodukt (32), umfassend ein Computerprogramm (30), das in einem computerlesbaren Mittel (34) gespeichert ist, um Kanalzustandsinformationen, CSI, in Bezug auf eine Gruppe von Übertragungspunkten, TPs, zu erhalten, umfassend einen Computerprogrammcode, der, wenn er auf einem Steuerknoten (2) ausgeführt wird, bewirkt, dass der Steuerknoten ein Verfahren ausführt, das Folgendes umfasst:

Übertragen (S2), durch die Gruppe von koordinierten TPs, von Kanalzustandsinformationsreferenzsymbolen, CSI-RS, gemäß verschiedenen CSI-RS-Übertragungskonfigurationen und zu verschiedenen Zeitpunkten, wobei das Übertragen (S2) das Übertragen von mindestens einem nicht springenden CSI-RS und mindestens einem springenden CSI-RS umfasst, das von einem ersten TP aus der Gruppe von koordinierten TPs zu einem zweiten TP aus der Gruppe von koordinierten TPs springt;

Empfangen (S4), in einer ersten Zeitinstanz, eines CSI-Berichts von mindestens einem Benutzergerät, UE (10); und

Assoziieren (S6) des empfangenen CSI-Berichts mit einer spezifischen CSI-RS-Übertragungskonfiguration der verschiedenen CSI-RS-Übertragungskonfigurationen.

**Revendications**

1. Procédé d'obtention d'informations d'état de canal, CSI, par rapport à un groupe de points de transmission coordonnés, TP, le procédé étant réalisé dans un noeud de commande (2), comprenant les étapes consistant à :

émettre (S2), par le groupe de TP coordonnés, selon différentes configurations d'émission de CSI-RS et à différents instants, des symboles de référence d'informations d'état de canal, CSI-RS, l'émission (S2) comprenant l'émission d'au moins un CSI-RS sans saut et d'au moins un CSI-RS avec saut qui passe d'un premier TP du groupe de TP coordonnés à un second TP du groupe de TP coordonnés ;

recevoir (S4), à un premier instant temporel, un rapport de CSI provenant d'au moins un équipement utilisateur, UE (10) ; et

associer (S6) ledit rapport de CSI reçu à une configuration d'émission de CSI-RS spécifique parmi les différentes configurations d'émission de CSI-RS.

2. Procédé selon la revendication 1, dans lequel les différentes configurations d'émission de CSI-RS définissent chacune un mappage à partir de ports de CSI-RS vers une pluralité d'antennes coordonnées sur un ou plusieurs TP du groupe de TP.

3. Procédé selon l'une quelconque des revendications précédentes, dans lequel l'association de ladite configuration d'émission de CSI-RS spécifique comprend la détermination d'une ressource de référence CSI dudit rapport de CSI reçu, dans lequel ladite configuration d'émission de CSI-RS spécifique correspond à la configuration d'émission de CSI-RS étant active avant et incluant ladite ressource de référence de CSI, et dans lequel ladite configuration d'émission de CSI-RS spécifique est associée à une sous-trame appartenant à un même ensemble de sous-trames que la ressource de référence de CSI.

4. Procédé selon l'une quelconque des revendications précédentes, comprenant en outre, avant l'étape de réception,

la planification (S8) de la transmission d'un rapport de CSI provenant de l'au moins un UE (10), dans laquelle ledit rapport de CSI est planifié de sorte que le rapport de CSI corresponde à une configuration d'émission de CSI-RS particulière.

5. Procédé selon l'une quelconque des revendications précédentes, comprenant en outre :

la détermination (S10) des différentes configurations d'émission de CSI-RS, les différentes configurations d'émission de CSI-RS assignant les CSI-RS pour que différents sous-groupes (12, 14, 16) dans le groupe de TP coordonnés soient transmis à différents instants et les CSI-RS pour que tous les TP de chaque sous-groupe soient transmis simultanément ; et

la fourniture (S12) de TP dans le groupe de TP coordonnés avec les différentes configurations d'émission de CSI-RS déterminées.

**6.** Procédé selon la revendication 5, comprenant en outre :

la réception (S16) d'informations relatives à la ou aux positions actuelles de l'au moins un UE (10) associé au groupe de TP coordonnés, dans lequel les différentes configurations d'émission de CSI-RS déterminées dépendent de la ou des position (s) actuelle(s).

**7.** Procédé selon la revendication 6, dans lequel la ou les position(s) actuelle(s) est (sont) déterminée(s) à partir de mesures d'UE reçues sur des symboles de référence spécifiques à une cellule pour un transfert.

**8.** Procédé selon la revendication 6, dans lequel la ou les position(s) actuelle(s) est (sont) déterminée(s) à partir de symboles de référence de sondage, SRS, reçus de l'au moins un UE (10) .

**9.** Procédé selon l'une quelconque des revendications précédentes, dans lequel le noeud de commande (2) fait partie d'un Noeud B évolué (20).

**10.** Procédé selon la revendication 5, comprenant en outre :

la réception (S18) d'une indication d'un numéro de l'au moins un UE (10) actuellement associé au groupe de TP coordonnés, les différentes configurations d'émission de CSI-RS déterminées dépendant dudit numéro.

**11.** Procédé selon l'une quelconque des revendications précédentes, dans lequel les différentes configurations d'émission de CSI-RS concernent en outre une ou plusieurs directions de faisceaux d'élévation pour des transmissions du CSI-RS.

**12.** Noeud de commande (2) pour obtenir des informations d'état de canal, CSI, par rapport à un groupe de points de transmission, TP, coordonnés comprenant :

le groupe de TP coordonnés conçus pour émettre des symboles de référence d'informations d'état de canal, CSI-RS, selon différentes configurations d'émission de CSI-RS et à différents instants, les CSI-RS émis comprenant au moins un CSI-RS sans saut et au moins un CSI-RS avec saut qui passe d'un premier TP du groupe de TP coordonnés à un second TP du groupe de TP coordonnés ; un récepteur (6) conçu pour, à un premier instant temporel, recevoir un rapport de CSI provenant d'au moins un équipement utilisateur, UE (10) ;

et

une unité de traitement (4) conçue pour associer ledit rapport de CSI reçu à une configuration d'émission de CSI-RS spécifique parmi les différentes configurations d'émission de CSI-RS.

**13.** Noeud de commande (2) selon la revendication 12, dans lequel ledit noeud de réseau est un Noeud B évolué (20).

**14.** Produit de programme d'ordinateur (32) comprenant un programme d'ordinateur (30) stocké sur un moyen lisible par ordinateur (34) pour obtenir des informations d'état de canal, CSI, par rapport à un groupe de points de transmission, TP, comprenant le code de programme d'ordinateur qui, lorsqu'il est exécuté sur un noeud de commande (2), provoque l'exécution par le noeud de commande d'un procédé comprenant :

l'émission (S2), par le groupe de TP coordonnés, selon différentes configurations d'émission de CSI-RS et à différents instants, de symboles de référence d'informations d'état de canal, CSI- RS, dans lequel l'émission (S2) comprend l'émission d'au moins un CSI-RS sans saut et d'au moins un CSI-RS avec saut qui passe d'un premier TP du groupe de TP coordonnés à un second TP du groupe de TP coordonnés ; la réception (S4), à un premier instant temporel, d'un rapport de CSI provenant d'au moins un équipement utilisateur, UE (10) ; et l'association (S6) dudit rapport de CSI reçu à une configuration d'émission de CSI-RS spécifique des différentes configurations d'émission de CSI-RS.

1a

8
TP

10
UE

8
TP

24

8
TP

26

20
eNB

22

Fig. 1 (Prior Art)

1b

10
UE

8
TP

8
TP

8
TP

20
eNB

28

Fig. 2 (Prior Art)

Fig. 3

Fig. 4

Fig. 5

Fig. 6

Fig. 7

Fig. 8

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011115421 A2